# EUROPÄISCHE PATENTANMELDUNG

(11) **EP 1 296 066 A2**
(43) Veröffentlichungstag der Anmeldung: **26.03.2003**
(21) Anmeldenummer: 02020283.4
(22) Anmeldetag: 11.09.2002
(51) Int. Cl.: F15C 5/00

(54) **Ventileinrichtung**

(30) Priorität: 25.09.2001 DE 20115733 U
(71) Anmelder: FESTO AG & Co, 73734 Esslingen (DE)
(72) Erfinder: Giousouf, Metin, 73732 Esslingen (DE); Weinmann, Michael, Dr., 73655 Plüderhausen (DE)
(74) Vertreter: Abel, Martin, Dipl.-Ing.

(57) **Zusammenfassung**

Es handelt sich um eine Ventileinrichtung, die mindestens ein Mikroventil (2) aufweist, das an einer Trägerstruktur (14) fixiert ist. Das Mikroventil (2) ist zu seiner Fixierung zwischen gummielastischem Trägermaterial (15) der Trägerstruktur (14) eingespannt. Dadurch ist eine einfache und kostengünstige Ventilmontage möglich.

## Beschreibung

Die Erfindung betrifft eine Ventileinrichtung, mit mindestens einem Mikroventil, das an einer Trägerstruktur fixiert ist.

Bei einer aus der US 5640995 bekannten Ventileinrichtung dieser Art sind mehrere Mikroventile auf einer aus mehreren Schichten bestehenden Trägerstruktur befestigt. Die Trägerstruktur besteht beispielsweise aus Leiterplattenmaterial oder keramischen Werkstoffen. Bei dem geschilderten Ausführungsbeispiel sind die Mikroventile auf der Oberfläche einer Leiterplatte befestigt. Dabei werden an die Ebenheit und Verzugsfreiheit der Leiterplatte sehr hohe Anforderungen gestellt. Der Aufwand für die Herstellung und Montage der Ventileinrichtung ist daher relativ groß.

Es ist die Aufgabe der vorliegenden Erfindung, eine Ventileinrichtung der eingangs genannten Art zu schaffen, die eine einfachere und kostengünstigere Ventilmontage ermöglicht.

Zur Lösung dieser Aufgabe ist vorgesehen, dass das Mikroventil zu seiner Fixierung zwischen gummielastischem Trägermaterial der Trägerstruktur eingespannt ist.

Die Befestigung eines oder mehrere Mikroventile an einer Trägerstruktur erfolgt somit durch Einspannen zwischen Trägermaterial, das über gummielastische Eigenschaften verfügt. Dieses Trägermaterial ist zum einen in der Lage, ausreichende Haltekräfte zum sicheren Fixieren des betreffenden Mikroventils aufzubauen. Andererseits kann es sich an die Form des Mikroventils selbsttätig anpassen, so dass auch größere Fertigungstoleranzen problemlos ausgeglichen werden, was die Herstellung und Montage vereinfacht. Schließlich kann durch die Gummielastizität des Trägermaterials auch eine mechanische Entkopplung des Mikroventils vom Umfeld erzielt werden; in das Trägermaterial eingeleitete Stöße belasten die Struktur des Mikroventils höchstens in geringem Maße.

Als Werkstoff für das Trägermaterial kommt beispielsweise Gummi oder Elastomer-Kunststoff in Frage, wobei ein schaumstoffartiger Aufbau möglich ist. Dabei kann das Trägermaterial durchgängig aus ein und demselben Werkstoff bestehen oder kann aus unterschiedlichen Werkstoffen ausgebildet sein.

Weitere vorteilhafte Ausgestaltungen der erfindungsgemäßen Ventileinrichtung gehen aus den Unteransprüchen hervor.

Es ist besonders zweckmäßig, das Trägermaterial mit wenigstens einer eine Tasche bildenden Ausnehmung zu versehen, in die ein Mikroventil eingesteckt ist. Die Tasche ist vorzugsweise so dimensioniert, dass das Trägermaterial vom eingesteckten Mikroventil elastisch verformt wird und das Mikroventil dadurch haltend beaufschlagt. Bei der Einsteckmontage wird das Mikroventil einfach in die Tasche eingedrückt und wird darin dann, maßgeblich durch Kraftschluss, sicher gehalten.

Es besteht ferner die Möglichkeit, ein Mikroventil zwischen zwei separaten gummielastischen Trägermaterialschichten einzuspannen. Beispielsweise wird das Mikroventil zwischen zwei Trägermaterialschichten platziert, die anschließend durch geeignete Beaufschlagungsmittel von entgegengesetzten Seiten her gegen das Mikroventil vorgespannt werden. Im montierten Zustand kann das Mikroventil vom Trägermaterial komplett umschlossen sein.

Insbesondere wenn das Trägermaterial mit wenigstens einer Tasche zum Einstecken eines Mikroventils ausgebildet ist, kann die das Festspannen des Mikroventils bewirkende Haltekraft auch ausschließlich vom Trägermaterial selbst geliefert werden, das bei der Montage des Mikroventils elastisch verformt wird, so dass eine Rückstellkraft des Trägermaterials auf das Mikroventil einwirkt.

Sofern die Ventileinrichtung mit Beaufschlagungsmitteln ausgestattet ist, enthalten diese zweckmäßigerweise zwei plattenartig ausgebildete Beaufschlagungskörper, zwischen denen sich das Trägermaterial befindet und die durch geeignete Spannmittel von entgegengesetzten Seiten her gegen das Trägermaterial vorgespannt sind. Die Spannmittel wirken zweckmäßigerweise unmittelbar zwischen den Beaufschlagungskörpern und können beispielsweise von Verhakungsmitteln und/oder von federelastischen Klammern gebildet sein.

Es besteht die Möglichkeit, in dem Trägermaterial zu mindestens einem Mikroventil führende elektrische Leiter vorzusehen. Auch können in dem Trägermaterial zu mindestens einem Mikroventil führende Fluidkanäle verlaufen. Diese elektrischen Leiter und/oder Fluidkanäle sind zweckmäßigerweise bereits vor der Montage des mindestens einen Mikroventils im Trägermaterial realisiert und führen dort zu den verschiedenen Stellen, an denen ein Mikroventil platziert wird. Dadurch kann erreicht werden, dass das jeweils installierte Mikroventil direkt mit den in das Trägermaterial einstrukturierten Fluidkanälen kommuniziert, wobei das Trägermaterial selbst die erforderliche Dichtfunktion übernimmt. In entsprechender Weise kann auch eine unmittelbare elektrische Kontaktierung des Mikroventils vorgenommen werden.

Sind im Trägermaterial sowohl elektrische Leiter als auch Fluidkanäle vorgesehen, kann sich eine funktionsspezifische Werkstoffauswahl des Trägermaterials empfehlen. Beispielsweise kann auf der zur elektrischen Kontaktierung dienenden Seite des Mikroventils Trägermaterial aus einem elektrisch leitfähig strukturierten Werkstoff Verwendung finden, während auf der zur fluidischen Verbindung dienenden entgegengesetzten Seite des Mikroventils ein Werkstoff gewählt wird, der besonders gute Dichteigenschaften besitzt.

Die gummielastischen Eigenschaften des Trägermaterials können es auch gestatten, die äußere Gestalt zur Anpassung an örtliche Gegebenheiten zu variieren, ohne die Integration der Mikroventile zu beeinträchtigen.

Nachfolgend wird die Erfindung anhand der beiliegenden Zeichnung näher erläutert. In dieser zeigen:
- Fig. 1: eine mit lediglich einem Mikroventil ausgestattete Ventileinrichtung, teilweise geschnitten,
- Fig. 2: einen Ausschnitt der Ventileinrichtung aus Fig. 1 zur Verdeutlichung der Montage des Mikroventils,
- Fig. 3: eine Draufsicht auf eine weitere Ausführungsform der Ventileinrichtung, die mit mehreren Mikroventilen ausgestattet ist,
- Fig. 4: eine weitere Ausführungsform der Ventileinrichtung, bei der ein Mikroventil zwischen zwei separaten gummielastischen Trägermaterialschichten eingespannt ist,
- Fig. 5: eine weitere Ausführungsform der Ventileinrichtung, aus der die Gestaltungsflexibilität des Trägermaterials hervorgeht, und
- Fig. 6: einen Längsschnitt durch eine weitere Bauform der erfindungsgemäßen Ventileinrichtung, deren Trägermaterial einen Mehrschichtaufbau besitzt.

Die in ihrer Gesamtheit jeweils mit Bezugsziffer 1 bezeichneten Ventileinrichtungen sind jeweils mit einem oder mehreren Mikroventilen 2 ausgestattet. Unabhängig vom konkreten Ausführungsbeispiel können die mit nur einem Mikroventil 2 ausgestatteten Ventileinrichtungen 1 auch mehrere Mikroventile 2 enthalten, und umgekehrt.

Die Mikroventile 2 sind eigenständige komplette Ventile, die ein Ventilgehäuse 3 aufweisen, in dem mindestens ein bewegliches Ventilglied 4 untergebracht ist. In Abhängigkeit von der momentanen Schaltstellung des Ventilgliedes 4 ergibt sich eine Freigabe und/oder Unterbrechung einer fluidischen Verbindung zwischen mehreren Ventilkanälen 5. Die bei den Ausführungsbeispielen vorgesehenen Mikroventile 2 verfügen über eine 2/2-Ventilfunktionalität, wenngleich auch höherwertige Funktionalitäten möglich wären, beispielsweise nach Art so genannter 3/2-Wegeventile.

Jedes Mikroventil 2 ist mit Antriebsmitteln 6 ausgestattet, durch die sich die Schaltstellung des Ventilgliedes 4 vorgeben lässt. Zweckmäßigerweise handelt es sich um elektrisch aktivierbare Antriebsmittel 6, wie dies beim Ausführungsbeispiel der Fall ist. Die Antriebsmittel 6 können beispielsweise auf elektrostatischem Funktionsprinzip basieren.

Die Ventilkanäle 5 münden mit Ventilkanalmündungen 7 zur Außenfläche des Ventilgehäuses 3 aus. Sämtliche Ventilkanalmündungen 7 befinden sich zweckmäßigerweise an der gleichen Gehäuse-Außenfläche, die nachfolgend als erste Gehäuse-Außenfläche 8 bezeichnet sei.

Die Antriebsmittel 6 verfügen über elektrische Kontaktmittel 12 zur Einspeisung der elektrischen Betätigungssignale. Auch sie sind zur Außenfläche des Ventilgehäuses 3 geführt, wo sie mit ersten elektrischen Kontaktflächen 13 enden. Bevorzugt sind sämtliche ersten elektrischen Kontaktflächen 13 an ein und derselben Gehäuse-Außenfläche angeordnet, die nachfolgend als zweite Gehäuse-Außenfläche 9 bezeichnet sei. Die ersten und zweiten Gehäuse-Außenflächen 8, 9 befinden sich zweckmäßigerweise an einander entgegengesetzten Seiten des Ventilgehäuses 3.

Die Mikroventile 2 besitzen vorzugsweise einen mikromechanisch strukturierten Aufbau. Sie können unter Einsatz der aus der Mikro-Systemtechnik bekannten Verfahren hergestellt worden sein, beispielsweise unter Verwendung einer Silizium-Ätztechnik oder eines Kunststoff-Abformungsverfahrens. Neben dem schon erwähnten Funktionsprinzip wäre beispielsweise auch ein piezoelektrisches, ein magnetostriktives oder ein Memorymetall-Funktionsprinzip denkbar.

Damit die Mikroventile 2 sinnvoll eingesetzt werden können, bedarf es ihrer Fixierung an einer allgemein mit Bezugsziffer 14 bezeichneten Trägerstruktur. Über diese Trägerstruktur erfolgt die mechanische, elektrische und fluidische Verbindung zur Makroumgebung des jeweiligen Mikroventils. Die Tragstruktur 14 kann also beispielsweise verwendet werden, um ein oder mehrere Mikroventile 2 am Einsatzort zu fixieren, die erforderlichen elektrischen Signale zu übermitteln und den Fluidaustausch zu gestatten.

Bei sämtlichen Ausführungsbeispielen enthält die Tragstruktur 14 gummielastisches Trägermaterial 15, zwischen dem das betreffende Mikroventil 2 fest eingespannt ist. Es ist allein diese Einspannung in dem über gummielastische Eigenschaften verfügenden Trägermaterial 15, die die Befestigung des Mikroventils 2 bewirkt. Es ist insbesondere keine direkte Verbindung zu einem starren Trägermaterial vorhanden, wie dies beim Stand der Technik üblicherweise der Fall ist.

Das Trägermaterial 15 besteht zweckmäßigerweise aus Gummi oder einem Elastomer-Kunststoff. Um eine besonders hohe Flexibilität zu erhalten, kann ein schaumstoffartiger Aufbau mit luftgefüllten Hohlräumen vorgesehen werden.

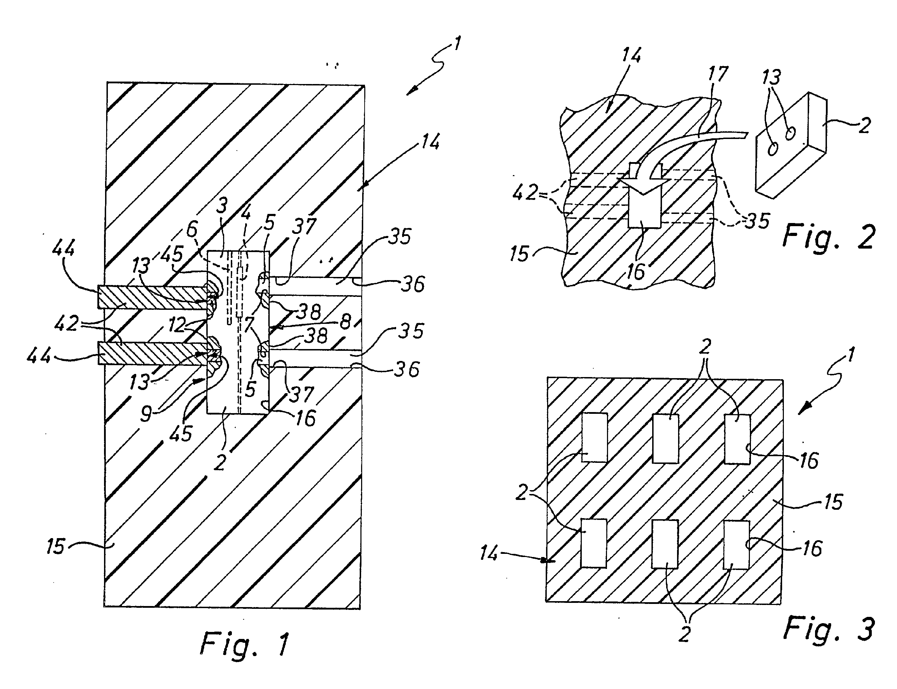

Beim Ausführungsbeispiel der Fig. 1 und 2 sitzt das Mikroventil 2 in einer zur Außenfläche des Trägermaterials 15 offenen Vertiefung, die man als Tasche 16 bezeichnen kann. Bei der Montage wird das Mikroventil 2 einfach in die Tasche 16 eingesteckt, wie dies in Fig. 2 durch den Pfeil 17 verdeutlicht wird.

Die Abmessungen der Tasche 16 sind zweckmäßigerweise so gewählt, dass bezüglich der Außenabmessungen des Mikroventils ein gewisses Untermaß besteht und mithin das Mikroventil 2 bei der Einsteckmontage mit gewissem Kraftaufwand in die Tasche 16 einzudrücken ist. Beim Eindrücken wird das Trägermaterial 15 elastisch verformt, wobei die daraus resultierende Rückstellkraft des gummielastischen Materials die zum Fixieren des Mikroventils 2 erforderliche Haltekraft liefert. Die durch die elastische Verformung des Trägermaterials 15 hervorgerufene Haltekraft kann die einzige Haltekraft sein, die auf das Mikroventil 2 einwirkt.

Die Ausgestaltung kann so getroffen sein, dass das Mikroventil 2 allein im Presssitz, durch die sich dabei einstellenden Reibungskräfte, in der Tasche 16 gehalten wird. Es wäre jedoch auch möglich, Maßnahmen vorzusehen, die zusätzlich eine formschlüssige Fixierung bewirken. Beispielsweise könnte die Außenfläche des Mikroventils 2 mit einer oder mehreren Vertiefungen und/oder Erhebungen ausgestattet sein, die im montierten Zustand mit dem nachgiebigen Trägermaterial 15 in Eingriff gelangen.

Der Aufbau der in Fig. 3 gezeigten Ventileinrichtung 1 entspricht demjenigen der Fig. 1 und 2, mit dem Unterschied, dass vom gleichen gummielastischen Trägermaterial 15 gleichzeitig mehrere Mikroventile 2 gehalten werden. In dem Trägermaterial 15 sind in beliebiger Anordnung mehrere Taschen 16 ausgebildet, in die jeweils ein Mikroventil 2 eingesetzt ist.

Es wäre möglich, in ein und derselben Tasche 16 mehrere Mikroventile 2 zu platzieren.

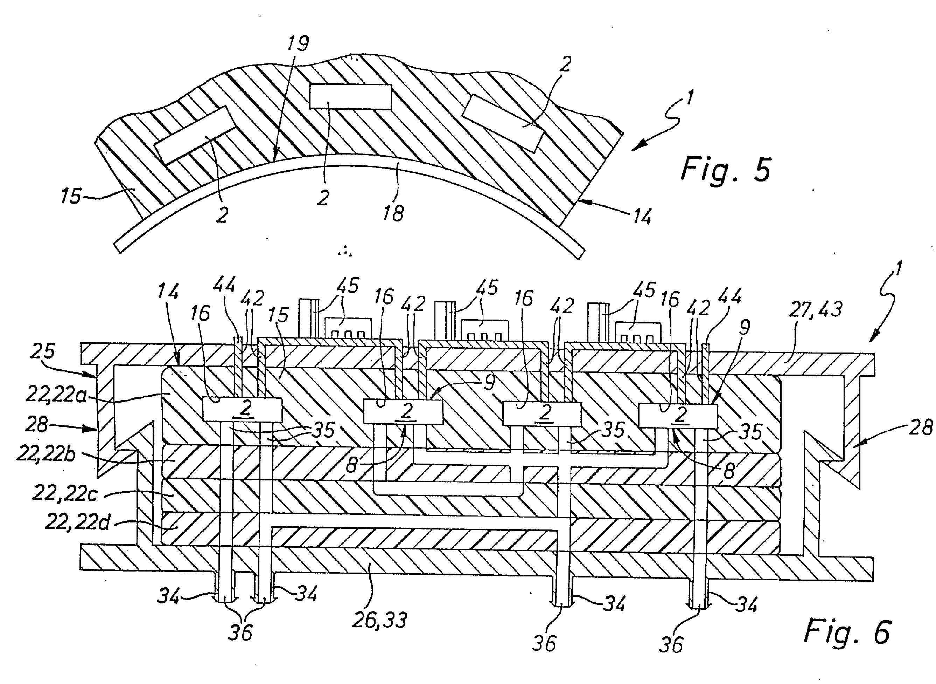

Der Aufbau der Ventileinrichtung 1 gemäß Fig. 5 entspricht prinzipiell demjenigen aus Fig. 3, wobei jedoch die Tragstruktur 14 zusätzlich einen Trägerkörper 18 mit gekrümmter Tragfläche 19 aufweist, auf der das Trägermaterial 15 platziert ist. Ersichtlich ist das gummielastische Trägermaterial 15 in der Lage, seine äußere Gestalt an die Gestalt der Tragfläche 19 anzupassen. Die Ventileinrichtung kann somit erforderlichenfalls auf räumlich gekrümmten Tragflächen montiert werden.

Der Trägerkörper 18 kann auch eine ebene Tragfläche aufweisen, beispielsweise um ein eine ebene Außenfläche besitzendes Trägermaterial 15 daran zu platzieren, wie dies bei der Ventileinrichtung 1 der Fig. 1 und 2 der Fall ist.

Das Trägermaterial 15 kann mit dem Trägerkörper 18 beispielsweise verklebt sein.

Der Trägerkörper 18 kann auch ein eigenständiger Körper sein, der nicht zur Tragstruktur 14 gehört und der beispielsweise an einer fluidtechnischen Einrichtung vorgesehen ist, die mit einer Ventileinrichtung 1 ausgestattet werden soll.

Beim Ausführungsbeispiel der Fig. 6 sind wiederum mehrere Mikroventile 2 in Aufnahmetaschen 16 des Trägermaterials 15 platziert. Mit Ausnahme der der Taschenöffnung zugewandten Außenfläche sind die Mikroventile 2 vom Trägermaterial 15 komplett umschlossen. Das Trägermaterial 15 besteht hier zweckmäßigerweise aus einem einheitlichen Werkstoff.

Gleichwohl macht die Ausführungsform gemäß Fig. 6 deutlich, dass das Trägermaterial über einen Schichtaufbau verfügen kann. Es setzt sich insbesondere aus mehreren, flächig aneinandergesetzten Trägermaterialschichten 22 zusammen, wobei die Mikroventile 2 innerhalb mindestens einer und vorzugsweise innerhalb ein und derselben Trägermaterialschicht 22a angeordnet sind.

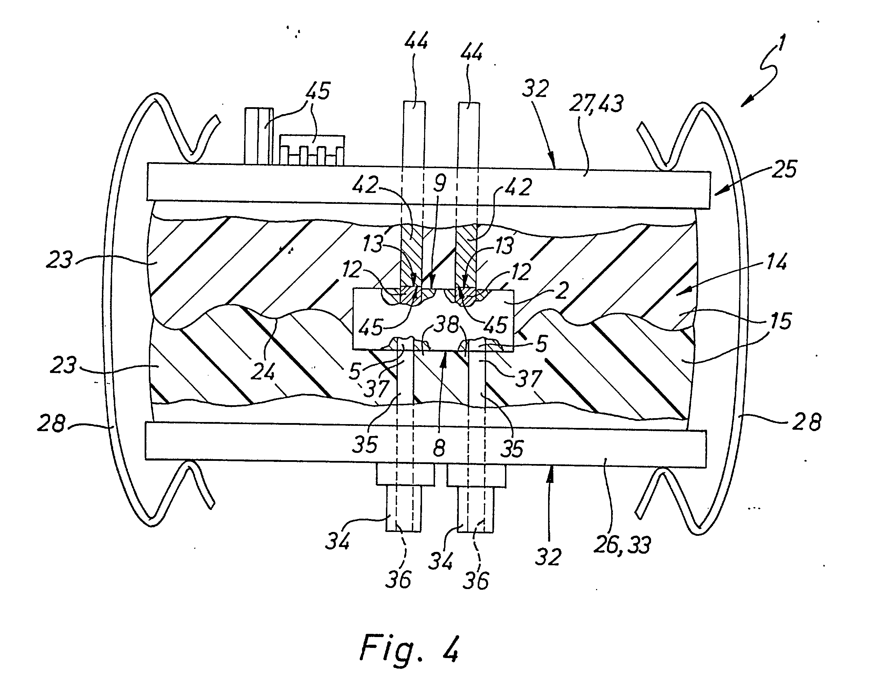

Bei dem in Fig. 4 gezeigten Ausführungsbeispiel setzt sich das gummielastische Trägermaterial 15 ebenfalls aus mehreren Trägermaterialschichten 23 zusammen, wobei es sich zweckmäßigerweise um genau zwei Trägermaterialschichten 23 handelt. Abweichend zur Bauform der Fig. 6 ist das mindestens eine Mikroventil 2 jedoch zwischen den beiden gummielastischen Trägermaterialschichten 23 angeordnet und eingespannt. Es erübrigt sich somit die Einformung taschenartiger Ausnehmungen in das Trägermaterial 15.

Um die Ventileinrichtung 1 gemäß Fig. 4 zusammenzubauen, kann das Mikroventil 2 bei noch voneinander getrennten Trägermaterialschichten 23 an der dafür vorgesehenen Stelle der einen Trägermaterialschicht 23 platziert werden, worauf von der entgegengesetzten Seite her die andere Trägermaterialschicht 23 angesetzt wird und schließlich die beiden Trägermaterialschichten 23 nurmehr von entgegengesetzten Seiten her mit dem Mikroventil 2 verspannt werden müssen.

Die Abmessungen der Trägermaterialschichten 23 können beispielsweise so gewählt werden, dass sie seitlich über das Mikroventil 2 nicht oder nur geringfügig überstehen. Bei der Ausführungsform der Fig. 4 ist eine größere Ausdehnung gewählt, so dass sich die Trägermaterialschichten 23 beim gegenseitigen Vorspannen um das Mikroventil 2 herumbiegen können und ein flächiger Kontakt zwischen den Trägermaterialschichten 23 rings um das Mikroventil 2 herum stattfindet. Die in Fig. 4 bei 24 markierte Kontaktfläche der Trägermaterialschichten 23 kann eben oder uneben gestaltet sein, in Abhängigkeit von der Ausgangsgestaltung der einander zugewandten Oberflächen der Trägermaterialschichten 23.

Ist das Mikroventil 2 gemäß Fig. 4 vom Trägermaterial 15 vollständig umschlossen, ergibt sich ein besonders wirksamer Schutz vor äußeren Einflüssen. Das Mikroventil 2 ist sicher in das gummielastische Trägermaterial 15 eingebettet.

Im Übrigen besteht bei den anderen Ausführungsbeispielen durchaus die Möglichkeit, die Öffnung der Taschen 16 nach dem Einstecken eines Mikroventils 2 zu verschließen. Beispielsweise kann ein Verschlussdeckel vorgesehen werden, der sich ähnlich einem Verschlussstopfen in der Tasche 16 fixieren lässt. Bei einer solchen Bauform wird dann die in Einsteckrichtung des Mikroventils 2 gemessene Tiefe der Tasche größer gewählt als die entsprechend gemessene Baulänge des Mikroventils 2, so dass bei komplett eingestecktem Mikroventil 2 im Bereich der Taschenöffnung noch ein Bereich verbleibt, der den Verschlussdeckel zumindest teilweise aufnehmen kann.

Wenn die eigene Materialvorspannung nicht ausreicht, um ein Mikroventil 2 sicher in einer Tasche 16 zu fixieren (Fig. 6) oder wenn ein Mikroventil 2 zwischen separaten Trägermaterialschichten 23 fixiert werden soll (Fig. 4), empfiehlt sich die Ausstattung der Ventileinrichtung 1 mit Beaufschlagungsmitteln 25, die in der Lage sind, das Trägermaterial 15 so zu beaufschlagen, dass zum Festspannen des betreffenden Mikroventils ausreichende Haltekräfte hervorgerufen werden.

Gemäß Fig. 4 und 6 können die Beaufschlagungsmittel 25 zwei vorzugsweise plattenartig ausgebildete erste und zweite Beaufschlagungskörper 26, 27 enthalten, zwischen denen das Trägermaterial 15 sandwichartig angeordnet ist. Die Ausdehnungsebenen der Beaufschlagungskörper 26, 27 verlaufen zweckmäßigerweise parallel zu denjenigen der zugeordneten Trägermaterialschichten 22, 23.

Der Umriss der Beaufschlagungskörper 26, 27 ist zweckmäßigerweise so gestaltet, dass der gesamte Umriss der Trägermaterialschichten 23 überdeckt wird.

Die Beaufschlagungsmittel 25 enthalten ferner geeignete Spannmittel 28, mit denen die beiden Beaufschlagungskörper 26, 27 gegeneinandergezogen werden, so dass sie von entgegengesetzten Seiten her gegen das Trägermaterial 15 vorgespannt werden und die Mikroventile 2 eine feste und doch elastisch nachgiebige Einspannung erfahren.

Beim Ausführungsbeispiel der Fig. 4 sind die Spannmittel 28 von federelastischen Klammern gebildet, die den Abstand zwischen den beiden Beaufschlagungskörpern 26, 27 überbrücken und gegen die voneinander abgewandten Außenflächen 32 der Beaufschlagungskörper 26, 27 vorgespannt sind. Die federelastischen Klammern bestehen beispielsweise aus Federstahl und können eine bügelartige Gestalt haben.

Bei der Ausführungsform der Fig. 6 sind die Spannmittel 28 von Verhakungsmitteln gebildet, die an beiden Beaufschlagungskörpern 26, 27 fixiert sind und die sich in einer Stellung hintergreifen, bei der die Beaufschlagungskörper 26, 27 so weit einander angenähert sind, dass die gewünschte Einspannungsintensität des Trägermaterials 15 gegeben ist.

Bei den Ausführungsbeispielen der Fig. 4 und 6 bildet der erste Beaufschlagungskörper 26 gleichzeitig einen Anschlusskörper 33, der mit Anschlussmitteln 34 ausgestattet ist, an denen sich nicht näher dargestellte Fluidleitungen, beispielsweise Fluidschläuche, anschließen lassen. Die Anschlussmittel 34 können als Steckverbindungseinrichtungen gestaltet sein.

Die Anschlussmittel 34 kommunizieren mit jeweils mindestens einem Fluidkanal 35, der das Trägermaterial 15 durchsetzt und zu mindestens einem Mikroventil 2 führt. Die Fluidkanäle 35 stellen die Fluidverbindung zwischen den im Trägermaterial 15 eingebetteten Mikroventilen 2 und von außen her zugänglichen Anschlussöffnungen 36 her, wobei die Anschlussöffnungen 36 bei den Ausführungsbeispielen der Fig. 4 und 6 von den Anschlussmitteln 34 definiert sind.

Auch bei den anderen Ausführungsbeispielen sind derartige Fluidkanäle 35 vorgesehen, wenngleich sie nicht in allen Figuren gezeigt sind. Wie aus Fig. 1 hervorgeht, können die Anschlussöffnungen 36 beim Entfall eines Anschlusskörpers 33 auch unmittelbar vom Endabschnitt der zu einer Außenfläche des Trägermaterials 15 ausmündenden Fluidkanäle 35 gebildet sein.

Die zur Verbindung mit einem Mikroventil 2 vorgesehenen Fluidkanäle 35 münden jeweils mit einer Fluidkanalmündung 37 zu demjenigen Flächenabschnitt des Trägermaterials 15 aus, an dem das Mikroventil 2 im eingespannten Zustand mit der ersten Gehäuseaußenfläche 8 zur Anlage gelangt. Die Anordnung ist so getroffen, dass sich bei montiertem Mikroventil 2 die Ventilkanalmündungen 7 und die Fluidkanalmündungen 37 paarweise gegenüberliegen. Indem nun das Trägermaterial 15 mit seinen die Fluidkanalmündungen 37 umschließenden Materialbereichen 38 rings um die zugeordnete Ventilkanalmündung 37 herum dichtend am Mikroventil 2 anliegt, ergibt sich eine sehr zuverlässig abgedichtete Fluidverbindung. Da die Kraftrichtung, mit der das Trägermaterial 15 gegen das Mikroventil 2 vorgespannt wird, mit der Achsrichtung der Kanalmündungen 7, 37 zweckmäßigerweise zusammenfällt, wird durch das Zusammenspannen gleichzeitig die erforderliche Dichtkraft zur Verfügung gestellt.

Bei dem Ausführungsbeispiel der Fig. 6 dient der Mehrschichtaufbau des Trägermaterials 15 auch dazu, sehr flexibel unterschiedliche Fluidkanalverläufe zwischen den Anschlussöffnungen 36 und den Mikroventilen 2 oder zwischen verschiedenen Mikroventilen 2 zu realisieren. Mehrere Trägermaterialschichten 22b, 22c, 22d enthalten interne Längenabschnitte der Fluidkanäle 35, die sich bei aneinander angesetzten Trägermaterialschichten zu dem gewünschten Kanalverlauf ergänzen. Entsprechend der Komplexität der gewünschten fluidischen Verschaltung kann die Anzahl der entsprechenden Trägermaterialschichten variiert werden. Die gegenseitige Abdichtung an den miteinander fluchtenden Kanalübergängen kann unmittelbar dadurch gewährleistet werden, dass man ein gummielastisches Trägermaterial mit Dichteigenschaften verwendet.

An dieser Stelle sei erwähnt, dass sich die Ventileinrichtung 1 sowohl mit hydraulischen Medien als auch mit gasförmigen Medien, insbesondere mit Druckluft, betreiben lässt.

In dem Trägermaterial 15 verlaufen elektrischer Leiter 42, über die den elektrischen Antriebsmitteln 6 der Mikroventile 2 die für die Betätigung erforderlichen elektrischen Betätigungssignale übermittelt werden können. Die elektrischen Leiter 42 sind beim Ausführungsbeispiel von bezüglich des Trägermaterials 15 separaten Leiterelementen gebildet, die das Trägermaterial 15 durchsetzen.

Bei den Ausführungsbeispielen der Fig. 4 und 6 verlaufen die elektrischen Leiter 42 ausgehend von einem vorzugsweise plattenartig ausgebildeten Kontaktierungskörper 43, der hier in Baueinheit mit dem zweiten Beaufschlagungskörper 27 ausgebildet ist. An dem Kontaktierungskörper 43 sind elektrische Kontaktmittel 44 vorgesehen, die das Einspeisen der elektrischen Betätigungssignale ermöglichen und die als Bestandteil der elektrischen Leiter 42 ausgeführt sein können. Gemäß der Bauform der Fig. 1 und 2 können die elektrischen Kontaktierungsmittel 44 unmittelbar von den aus dem Trägermaterial 15 herausragenden Endabschnitten der elektrischen Leiter 42 gebildet sein.

Der Kontaktierungskörper 43 kann bei Bedarf mit elektrischen und elektronischen Bauelementen 45 bestückt sein, die für die elektrische Ansteuerung der Mikroventile 2 benötigt werden. Sie stehen in geeigneter Weise mit den erforderlichen elektrischen Leitern 42 in Verbindung.

In bevorzugter Ausgestaltung ist der Kontaktierungskörper 43 eine Leiterplatte.

Die elektrische Kontaktierung zwischen den elektrischen Leitern 42 des Trägermaterials 15 und den elektrischen Kontaktmitteln 12 der Mikroventile 2 erfolgt zweckmäßigerweise allein durch kraftschlüssigen Berührkontakt ohne Steckverbindungsmaßnahmen. Gemäß Fig. 1 und 4 münden die elektrischen Leiter 42 mit jeweils einer stirnseitigen zweiten elektrischen Kontaktfläche 45 zu demjenigen Flächenabschnitt des Trägermaterials 15 aus, der der zweiten Gehäuse-Außenfläche 9 des Mikroventils 2 zugewandt ist. Die Anordnung ist so getroffen, dass sich erste und zweite elektrische Kontaktflächen 13, 45 paarweise gegenüberliegen und mit Vorspannung aneinander anliegen. Auf diese Weise werden beim Montieren der Mikroventile 2 nicht nur die fluidischen, sondern auch die elektrischen Verbindungen hergestellt.

Ist ein Mikroventil 2 zwischen zwei Trägermaterialschichten 23 eingespannt, kann gemäß Fig. 4 vorgesehen sein, dass die Fluidkanäle 35 in der einen und die elektrischen Leiter 42 in der anderen Trägermaterialschicht 23 ausgebildet sind. Dadurch ergibt sich die Möglichkeit, die Werkstoffe für das Trägermaterial 15 funktionsspezifisch auszuwählen. Beispielsweise kann die die Fluidkanäle 35 enthaltende Trägermaterialschicht 23 hinsichtlich optimaler fluiddichter Eigenschaften ausgewählt werden, und die die elektrischen Leiter 42 enthaltende Trägermaterialschicht 23 kann beispielsweise aus elektrisch leitfähig strukturiertem Material hergestellt werden, um eine integrale Ausbildung der elektrischen Leiter 42 zu ermöglichen.

Insgesamt können die elektrischen Leiter sowohl von in das Trägermaterial 15 eingebetteten Leiterelementen und/oder von elektrisch leitenden Materialbereichen des Trägermaterials 15 gebildet sein, letzteres beispielsweise unter Verwendung anisotrop leitfähiger Kunststoffe.

Die bei den Ausführungsbeispielen der Fig. 4 und 6 realisierte Baueinheit der Beaufschlagungskörper 26, 27 sowie des Anschlusskörpers 33 und des Kontaktierungskörpers 43 ist nicht zwingend erforderlich. Je nach Anwendungsfall können auch entweder nur Beaufschlagungskörper 26, 27 oder nur ein Anschlusskörper 33 und/oder ein Kontaktierungskörper 43 vorgesehen werden. Wie die Fig. 1 zeigt, kann auf derartige Körper auch komplett verzichtet werden.

## Patentansprüche

1. Ventileinrichtung, mit mindestens einem Mikroventil (2), das an einer Trägerstruktur (14) fixiert ist, **dadurch gekennzeichnet, dass** das Mikroventil (2) zu seiner Fixierung zwischen gummielastischem Trägermaterial (15) der Trägerstruktur (14) eingespannt ist.

2. Ventileinrichtung nach Anspruch 1, **dadurch gekennzeichnet, dass** mindestens ein Mikroventil (2) in eine Tasche (16) des Trägermaterials (15) eingesteckt ist.

3. Ventileinrichtung nach Anspruch 2, **dadurch gekennzeichnet, dass** die Tasche (16) so dimensioniert ist, dass das Trägermaterial (15) vom eingesteckten Mikroventil (2) elastisch verformt wird und das Mikroventil (2) dadurch haltend beaufschlagt wird.

4. Ventileinrichtung nach einem der Ansprüche 1 bis 3, **dadurch gekennzeichnet, dass** mindestens ein Mikroventil (2) zwischen zwei separaten gummielastischen Trägermaterialschichten (23) eingespannt ist.

5. Ventileinrichtung nach einem der Ansprüche 1 bis 4, **dadurch gekennzeichnet, dass** die das Festspannen mindestens eines Mikroventils bewirkenden Haltekräfte ausschließlich von der bei der Montage des Mikroventils hervorgerufenen elastischen Verformung des Trägermaterials (15) herrühren.

6. Ventileinrichtung nach einem der Ansprüche 1 bis 4, **gekennzeichnet durch** Beaufschlagungsmittel (25) zum Beaufschlagen des Trägermaterials (15) zum Zwecke des Hervorrufens mindestens ein Mikroventil festspannender Haltekräfte.

7. Ventileinrichtung nach Anspruch 6, **dadurch gekennzeichnet, dass** die Beaufschlagungsmittel (25) zwei vorzugsweise plattenartig ausgebildete Beaufschlagungskörper (26, 27) enthalten, zwischen denen das Trägermaterial (15) angeordnet ist und die von entgegengesetzten Seiten her gegen das Trägermaterial (15) vorgespannt sind.

8. Ventileinrichtung nach Anspruch 7, **gekennzeichnet durch** Spannmittel (28) zum gegenseitigen Verspannen der Beaufschlagungskörper (26, 27).

9. Ventileinrichtung nach Anspruch 8, **dadurch gekennzeichnet, dass** die Spannmittel (28) Verhakungsmittel und/oder mindestens eine federelastische Klammer aufweisen.

10. Ventileinrichtung nach einem der Ansprüche 1 bis 9, **dadurch gekennzeichnet, dass** in dem Trägermaterial (15) zu dem mindestens einen Mikroventil (2) führende elektrische Leiter (42) verlaufen, die zweckmäßigerweise allein durch Berührkontakt an das betreffende Mikroventil (2) angeschlossen sind.

11. Ventileinrichtung nach Anspruch 10, **dadurch gekennzeichnet, dass** die elektrischen Leiter (42) von in das Trägermaterial (15) eingebetteten Leiterelementen und/oder von elektrisch leitenden Materialbereichen des Trägermaterials (15) gebildet sind.

12. Ventileinrichtung nach Anspruch 10 oder 11, **dadurch gekennzeichnet, dass** die elektrischen Leiter (42) zumindest teilweise zu einem an das Trägermaterial (15) angesetzten und vorzugsweise plattenartig ausgebildeten Kontaktierungskörper (43) führen, der zweckmäßigerweise von einer Leiterplatte gebildet ist.

13. Ventileinrichtung nach einem der Ansprüche 1 bis 12, **dadurch gekennzeichnet, dass** in dem Trägermaterial (15) zu dem mindestens einen Mikroventil (2) führende Fluidkanäle (35) verlaufen.

14. Ventileinrichtung nach Anspruch 13, **dadurch gekennzeichnet, dass** die Fluidverbindung zwischen den Fluidkanälen (35) und dem zugeordneten Mikroventil (2) zumindest teilweise dadurch realisiert ist, dass das Trägermaterial (15) mit die betreffende Fluidkanalmündung (37) umschließenden Materialbereichen (38) dichtend am Mikroventil (2) anliegt.

15. Ventileinrichtung nach Anspruch 13 oder 14, **dadurch gekennzeichnet, dass** die Fluidkanäle (35) zumindest teilweise zu einem an das Trägermaterial (15) angesetzten und vorzugsweise plattenartig ausgebildeten Anschlusskörper (33) führen, der zweckmäßigerweise mit Anschlussmitteln (34) für Fluidleitungen ausgestattet ist.

16. Ventileinrichtung nach einem der Ansprüche 1 bis 15, **dadurch gekennzeichnet, dass** das Trägermaterial (15) mehrere, flächig aneinandergesetzte Trägermaterialschichten (22) aufweist, in denen miteinander kommunizierende Fluidkanalabschnitte verlaufen.

17. Ventileinrichtung nach einem der Ansprüche 12 bis 16 in Verbindung mit Anspruch 7, **dadurch gekennzeichnet, dass** der Kontaktierungskörper (43) und/oder der Anschlusskörper (33) gleichzeitig einen Beaufschlagungskörper (26, 27) der Beaufschlagungsmittel (25) bildet.

18. Ventileinrichtung nach einem der Ansprüche 1 bis 17, **dadurch gekennzeichnet, dass** das Trägermaterial (15) aus wenigstens zwei unterschiedlichen Werkstoffen besteht.

19. Ventileinrichtung nach einem der Ansprüche 1 bis 18, **dadurch gekennzeichnet, dass** das Trägermaterial (15) aus Gummi oder aus einem Elastomer-Kunststoff besteht.

20. Ventileinrichtung nach einem der Ansprüche 1 bis 19, **gekennzeichnet durch** mehrere, vom gleichen gummielastischen Trägermaterial (15) gehaltene Mikroventile (2).
